# EUROPÄISCHE PATENTSCHRIFT

(11) **EP 2 552 853 B1**
(45) Veröffentlichungstag und Bekanntmachung des Hinweises auf die Patenterteilung: **29.04.2020**
(21) Anmeldenummer: 11711552.7
(22) Anmeldetag: 30.03.2011
(51) Int. Cl.: C04B 24/42, C04B 28/02, C04B 40/00

(54) **ZEMENTHALTIGE MISCHUNG FÜR WERKSTOFFE MIT "EASY-TO-CLEAN"-EIGENSCHAFTEN DURCH MASSENMODIFIKATION MITTELS FLUORHALTIGER WIRKSTOFFE**
CEMENTITIOUS MIXTURE FOR MATERIALS HAVING "EASY-TO-CLEAN" PROPERTIES BY MODIFICATION OF THE UNSET MATERIAL BY MEANS OF FLUORINE-CONTAINING ACTIVE INGREDIENTS
MÉLANGE CONTENANT DU CIMENT POUR DES MATÉRIAUX AUX PROPRIÉTÉS D'"ENTRETIEN FACILE" PAR MODIFICATION DE LA MATIÈRE AU MOYEN DE SUBSTANCES ACTIVES CONTENANT DU FLUOR

(30) Priorität: 01.06.2010 DE 102010029588; 01.04.2010 DE 102010003589
(43) Veröffentlichungstag der Anmeldung: 06.02.2013
(73) Patentinhaber: Evonik Operations GmbH, 45128 Essen (DE)
(72) Erfinder: FRIEDEL, Manuel, CH-8048 Zürich (CH); ALBERT, Philipp, 79539 Lörrach (DE); STANDKE, Burkhard, 79540 Lörrach (DE); LJESIC, Spomenko, 79618 Rheinfelden (DE)
(74) Vertreter: Evonik Patent Association
(86) Internationale Anmeldenummer: PCT/EP2011/054922
(87) Internationale Veröffentlichungsnummer: WO 2011/121032

(56) Entgegenhaltungen:
- EP-A1- 0 919 526
- EP-A1- 1 262 464
- EP-A1- 1 982 964
- EP-A2- 1 086 935
- JP-A- H03 261 642
- DATABASE WPI Week 199202 Thomson Scientific, London, GB; AN 1992-012154 & JP H03 261642 A (TORAY DOW CORNING) 21 November 1991 (1991-11-21)

## Beschreibung

Die vorliegende Erfindung betrifft eine spezielle hydraulisch abbindende Mischung, wobei ein daraus hergestelltes, abgebundenes bzw. erhärtetes Werkstück an der Oberfläche Schmutz abweisende Eigenschaften aufweist.

Hydraulisch abbindende Materialien, beispielsweise zementgebundene Werkstoffe, werden im modernen Bauwesen an zahlreichen relevanten Stellen verwendet, so zum Beispiel für die Anwendung Betonpflastersteine für Einfahrten, Gehwege oder Terrassen. Besonders im Außenbereich stellen die Verschmutzung der Oberflächen solcher Betonpflastersteine durch verschiedenste Materialien, wie zum Beispiel Verkehrs- und Industrieabgase, insbesondere Ruße, Blütenpollen, Grasflecken, Öle, insbesondere Motoröle, Getränke- und Speiserückstände, insbesondere Cola, Kaffee, Rotwein oder Ketchup, sowie durch das Wachstum von Mikroorganismen, wie Algen oder Pilzen, ein aus ästhetischer Sicht großes Problem dar. Die Ausstattung hydraulisch abgebundener Werkstoffe in solchen Anwendungen mit Schmutz abweisenden Eigenschaften [im Folgenden auch "easy-to-clean" ("einfach zu reinigen") oder ETC genannt] ist daher wünschenswert.

Unter Schmutz abweisenden Eigenschaften ist die Eigenschaft der Oberfläche zu verstehen, das Eindringen von sowohl wässrigen als auch öligen Substanzen in den Werkstoff zu verhindern und das Entfernen dieser Substanzen von der Oberfläche zu erleichtern.

Es ist bekannt, "easy-to-clean"-Eigenschaften durch eine Nachbehandlung fertiger, ausgehärteter Oberflächen mit verschiedenen Materialien zu erzeugen. So lehrt u. a. EP 0 838 467 den Einsatz eines fluorhaltigen Silans bzw. Silansystems zur Oberflächenvergütung. Nachteil von solchen Systemen zur Nachbehandlung einer Oberfläche ist einerseits die Notwendigkeit eines weiteren Prozessschrittes nach der Herstellung solcher Materialien bzw. Werkstoffe, andererseits ist häufig die Dauerhaftigkeit solcher Beschichtungen zu gering, da sie durch Bewitterung und Abrieb abgetragen werden.

Es ist weiterhin bekannt, hydraulisch erhärtende Materialien, insbesondere zementgebundene Werkstoffe, durch den Zusatz von Massenmodifizierungsmittel zu verbessern. So lehrt die EP 0 913 370 den Einsatz von wässrigen, silanhaltigen Emulsionen zur Erzielung von Wasser abweisenden (hydrophoben) Eigenschaften solcher Materialien. Leider führt die Lehre nicht zu den gewünschten "easy-to-clean"-Oberflächen.

Aus US 5,650,004 ist eine zementgebundene Putzmischung bekannt, die für die Abdichtung von Schwimmbädern eingesetzt wird. Die Wasser abweisenden Eigenschaften und eine verbesserte Dauerhaftigkeit der Putzmischung werden durch den Zusatz von silanmodifizierten Pulvern und puzzolanischen Füllstoffen erreicht. Nachteil dieser Putzmischung ist, dass zwar dauerhaft Wasser abweisende Eigenschaften erzielt werden können, also auch wässrige Verschmutzungen abgewiesen werden können, aber keine Schmutz abweisenden Eigenschaften im oben beschriebenen Sinne erzielt werden.

Aus DE 10 346 082 sind hydraulisch erhärtende Mischungen bekannt, deren spezielle Zusammensetzung zu einem veränderten Gefüge führt. Dadurch werden verschleißfeste Werkstücke mit bedingt Schmutz abweisenden Oberflächen erhalten.

Aus EP 1 445 242 sind nichtzementgebundene Putze bzw. Beschichtungen für Fassaden bekannt, die Schmutz abweisende Eigenschaften aufweisen. Die Schmutz abweisenden Eigenschaften werden erreicht, indem die Mikrorauhigkeit derart verringert wird, dass Schmutzpartikel nicht in den Porenraum eindringen und festsetzen können. Nachteil dabei ist, dass kaliwasserglasbasierte, nichtzementgebundene Putzmischungen als solche modifiziert werden.

EP1086935A2 zeigt hydraulische Zusammensetzungen die Silikonöl enthalten. EP0919526A1 zeigt Baustoffmassen die hydrophobierende Pulver enthalten. EP1262464A1 zeigt hydraulische Zusammensetzungen die fluorchemische Verbindungen enthalten. EP1982964A1 zeigt Organosiliciumverbindungen enthaltende Mischungen zum Korrosionsschutz von Substraten. "DATABASE WPI Week 199202 Thomson Scientific, London, GB; AN 1992-012154 & JP H03 261642 A (TORAY DOW CORNING) 21. November 1991" zeigt hydraulische Zusammensetzungen mit verbesserten öl- und schmutzabweisenden Eigenschaften die Organosiloxane enthalten.

Der vorliegenden Erfindung lag die Aufgabe zugrunde, eine weitere hydraulisch abbindende Mischung, insbesondere zementgebundene Mischung zur Verfügung zu stellen, wobei die Oberfläche eines daraus hergestellten Werkstoffs nach dem Abbinden bzw. Erhärten ausreichend gute Schmutz abweisende Eigenschaften aufweist und diese möglichst dauerhaft sind.

Diese Aufgabe wird erfindungsgemäß entsprechend den Merkmalen der Patentansprüche gelöst.

Überraschenderweise wurde nun gefunden, dass durch die Zugabe von mindestens einer fluororganylsubstituierten Silicium-Verbindung, insbesondere eines fluororganylsubstituierten Silans und/oder fluororganylsubstituierten Siloxans, zu einer hydraulisch abbindenden Mischung, insbesondere einer ansonsten gängigen Betonmischung, dauerhafte ETC-Eigenschaften eines daraus hergestellten, hydraulisch abgebundenen sowie erhärteten Werkstoffs erzielt werden können. Dabei weist das so verwendete fluororganylsubstituierten Silan bzw. fluororganylsubstituierten Siloxan oder eine darauf basierte fluororganylsubstituierte Silicium-Verbindung enthaltende Zubereitung bevorzugt eine flüssige, beispielsweise ölartige, bis cremartige bzw. pastöse Konsistenz auf.

Gegenstand der vorliegenden Erfindung ist somit eine hydraulisch abbindende Mischung, insbesondere für Werkstoffe mit "easy-to-clean"-Eigenschaften, umfassend:
a) 6 bis 25 Gew.-%, bevorzugt 10 bis 20 Gew.-%, besonders bevorzugt 12 bis 18 Gew.-%, Zement,
b) 50 bis 90 Gew.-%, bevorzugt 65 bis 85 Gew.-%, besonders bevorzugt 70 bis 80 Gew.-%, mindestens eines Zuschlagstoffs, wobei das Größtkorn 8 bis 63 mm und/oder bei Sand 5 mm ist und
c) 0,01 bis 8 Gew.-%, bevorzugt 0,02 bis 5 Gew.-%, besonders bevorzugt 0,05 bis 2 Gew.-%, mindestens einer fluororganylsubstituierten Silicium-Verbindungen ausgewählt aus der Reihe der monomeren fluoralkylsubstituierten Silane und fluoralkylsubstituierten Siloxane oder Mischungen davon, d) 0,01 bis 2 Gew.-% Fließmittel, ausgewählt aus der Reihe Polycarboxylatether (PCEs), Polymethylmethacrylate, Ligninsulfonate und Naphthalin-Formaldehyd-Sulfonate, und/oder e) 0,01 bis 1 Gew.-% mindestens eines weiteren Hilfsmittels ausgewählt aus der Reihe Dispergierhilfsmittel, Netzmittel, Entschäumer, Luftporenbildner, Verzögerer, Beschleuniger und Wasserreduzierer.

Dabei ergeben die jeweils eingesetzten Mischungsbestandteile bzw. Komponenten in Summe 100 Gew.-%.

Es ist vorgesehen, dass je nach konkreter Auswahl der Mischungsbestandteile in jedem Fall die unter a), b) und c) genannten allgemeinen Mengenbegrenzungen eingehalten werden.

Die erfindungsgemäß eingesetzten fluororganylsubstituierten Silicium-Verbindungen sind ausgewählt aus der Reihe der monomeren fluoralkylsubstituierten Silane und fluoralkylsubstituierten Siloxane oder Mischungen davon. Bevorzugte Beispiele für ein monomeres fluoralkylsubstituiertes Silan sind 3,3,4,4,5,5,6,6,7,7,8,8,8-Tridecafluoroctyl-trimethoxysilan sowie 3,3,4,4,5,5,6,6,7,7,8,8,8-Tridecafluoroctyltriethoxysilan. Geeigneterweise kann man erfindungsgemäß als fluororganylsubstituierten Silicium-Verbindungen aber auch Zubereitungen verwenden, die auf mindestens einem besagten monomeren fluoralkylsubstituierten Silan oder fluoralkylsubstituierten Siloxan und optional mindestens einem weiteren Organosilan bzw. Organosiloxan, insbesondere einem C₁-C₁₆-Alkyltrialkoxysilan, beispielsweise Methyl-, Propyl-, Butyl-, Octyl-, Hexadecyltrimethoxysilan bzw. -triethoxysilan, um nur einige zu nennen, oder einem oligomeren Organoalkoxysilan, basierten Mischungen beruht, wobei solche Zubereitungen aus der Reihe der wasser-, alkohol- und/oder kohlenwasserstoffhaltigen Lösungen oder Emulsionen ausgewählt ist. Solche Zubereitungen sind beispielsweise, aber nicht ausschließlich, aus DE 196 06 011, EP 0 538 555, EP 0 675 128, EP 0 716 127, EP 0 716 128, EP 0 832 911, EP 0 846 717, EP 0 953 591, EP 0 960 921, EP 1 033 395, EP 1 101 787, EP 1 193 302, WO 2006/010666, WO 2006/010388, WO 2009/030538 zu entnehmen.

Ein zusätzlicher Vorteil der erfindungsgemäß eingesetzten fluororganylsubstituierten Silicium-Verbindungen ist, dass Silane oft eine verflüssigende Wirkung auf Zubereitungen haben. Die hier eingesetzten Fluororganosysteme beeinflussen dabei überraschenderweise nicht nachteilig die Grünstandfestigkeit.

Darüber hinaus enthält eine erfindungsgemäße hydraulisch abbindende Mischung als weitere Komponenten zusätzlich
d) 0,01 bis 2 Gew.-%, bevorzugt 0,05 bis 0,5 Gew.-% Verflüssiger, und/oder
e) 0,01 bis 1 Gew.-% mindestens eines weiteren Hilfsmittels umfassen.

An Zementen können in einer erfindungsgemäßen Mischung alle üblichen aus der Reihe der Portland-Zemente, Kompositzemente, Zemente mit Anteilen an Puzzolanen, wie Flugasche oder Mikrosilica, und Hochofenzemente ausgewählt und eingesetzt werden bzw. enthalten sein. So ist bei einer erfindungsgemäßen Mischung der Zement vorzugsweise - aber nicht ausschließlich - aus der Reihe der Portlandzemente, der Kompositzemente sowie der Hochofenzemente ausgewählt.

So genannte Zuschlagstoffe in einer erfindungsgemäßen Mischung können beispielsweise Gesteinskörnungen nach EN 206-1:2000 sein. Insbesondere können Zuschlagstoffe Aggregate, Sande, Kiese, Splitte, Porphyr, Quarzmehl, Kalkmehl und Gesteinsmehl oder Mischungen davon, aber auch Flugaschen, Mikrosilica und sonstige silikatische Zusatzstoffe oder Mischungen davon sein. Dabei können Sande beispielsweise Quarzsande oder Flusssande sein. Bevorzugt sind Kiese, Splitte, Brechsande, Porphyr, Quarzmehl, Kalkmehl und Gesteinsmehl oder Mischungen davon. So kann eine erfindungsgemäße Mischung vorteilhaft Zuschläge enthalten, die ein Größtkorn von 8 bis 63 mm enthalten, besonders bevorzugt von 8 mm, 16 mm, 32 mm oder 63 mm, insbesondere Zuschläge mit einem Größtkorn von 32 mm, gemäß den Vorgaben der DIN 1045-2. Besonders bevorzugt ist, wenn der oder die Zuschlagstoffe ein Aggregat mit 32 mm Größtkorn und/oder Sand mit 5 mm Größtkorn ist/sind.

Eine erfindungsgemäße Mischung kann man in der Regel in einfacher und wirtschaftlicher Weise durch das Zusammengeben und Mischen der anspruchsgemäßen Komponenten herstellen. So kann man typischerweise eine erfindungsgemäße Mischung mit Wasser versetzen und in einem Mischapparat mischen.

So kann man im Allgemeinen durch Mischen der Komponenten gemäß dem vorliegenden Hauptanspruch zunächst eine hydraulische abbindende Mischung bereitstellen. Dieser kann man, wenn man sie dann bei Applikation mit einer anspruchsgemäßen Menge an Wasser zusammengibt, gegebenenfalls unter guter Durchmischung mit bzw. in dem Fachmann an sich bekannten Geräten bzw. Behältern, weitere Komponenten, die bereits oben aufgezählt sind, zusetzen und die so erhaltene Mischung bzw. eine so hergestellte Masse in eine gewünschte Form bringen und hydraulisch abbinden bzw. erhärten lassen.

Erfindungsgemäße fluororganylsubstituierten Silicium-Verbindungen können (i) Verbindungen sein, die aus den allgemeinen Formeln I, II, III, IV und/oder V abgeleitet sind und können vernetzende Strukturelemente aufweisen, die kettenförmige, cyclische, vernetzte und/oder raumvernetzte Strukturen bilden, wobei mindestens eine Struktur in idealisierter Form der allgemeinen Formel I entspricht,

(HO)[(HO)₁₋ₓ(R²)ₓSi(A)O]ₐ[Si(B)(R³)_{y}(OH)_{1-y}O]_{b}[Si(C)(R⁵)ᵤ(OH)₁₋ᵤO]_{c}[Si(D)(OH)O]_{d}H ·(HX)ₑ (I),

wobei in Formel I die Strukturelemente aus Alkoxysilan der allgemeinen Formeln II, III, IV und/oder V abgeleitet sind und
- A einem Aminoalkylrest H₂N(CH₂)_{f}(NH)_{g}(CH₂)ₕ(NH)ₘ(R⁷)ₙ- in dem Strukturelement, abgeleitet aus der allgemeinen Formel II entspricht,

   H₂N(CH₂)_{f}(NH)_{g}(CH₂)ₕ(NH)ₘ(R⁷)ₙSi(OR¹)₃₋ₓ(R²)ₓ (II),

   wobei f eine ganze Zahl zwischen 0 und 6 ist, mit g=0 falls f=0 und g=1 falls f>0, h eine ganze Zahl zwischen 0 und 6, x=0 oder 1, m=0 oder 1 und n=0 oder 1, MIT n+m=0 oder 2 in Formel II ist, und R⁷ eine lineare, verzweigte oder cyclische bivalente Alkyl-Gruppe mit 1 bis 16 C-Atomen ist,
- B einem Fluoralkylrest R⁴-Y-(CH₂)ₖ- in dem Strukturelement, abgeleitet aus der allgemeinen Formel III entspricht,

   R⁴-Y-(CH₂)ₖSi(R³)_{y}(OR¹)_{3-y} (III),

   wobei R⁴ eine mono-, oligo- oder perfluorierte Alkyl-Gruppe mit 1 bis 9 C-Atomen oder eine mono-, oligo- oder perfluorierte Aryl-Gruppe, Y eine CH₂-, O- oder S-Gruppe, R³ eine lineare, verzweigte oder cyclische Alkyl-Gruppe mit 1 bis 8 C-Atomen oder eine Aryl-Gruppe bedeuten, k=0, 1 oder 2 und y=0 oder 1 in Formel III und/oder VI ist, vorzugsweise ist R⁴ = F₃C(CF₂)ᵣ-, mit r=0 bis 18, vorzugsweise r=5, mit Y eine CH₂- oder O-Gruppe, und vorzugsweise k=1 mit Y = -CH₂-,
- C einem Alkylrest R⁵- in dem Strukturelement, abgeleitet aus der allgemeinen Formel IV entspricht,

   R⁶-Si(R⁵)ᵤ(OR¹)₃₋ᵤ (IV),

   wobei R⁵ eine lineare oder verzweigte Alkyl-Gruppe MIT 1 bis 4 C-Atomen, insbesondere Methyl und u=0 oder 1 in Formel IV ist,
- D einem Alkylrest R⁶- in dem Strukturelement, abgeleitet aus der allgemeinen Formel IV entspricht,

   R⁶-Si(OR¹)₃ (V),

   worin R⁶ in den vorgenannten Formeln eine lineare, verzweigte oder cyclische Alkyl-Gruppe mit 1 bis 8 C-Atomen bedeutet, und
   R¹ in den Formeln II, III, IV, V und/oder VI unabhängig von einander eine lineare, verzweigte oder cyclische Alkyl-Gruppe mit 1 bis 8 C-Atomen oder ein Aryl-Gruppe bedeutet, vorzugsweise ist R¹ unabhängig Methyl, Ethyl oder Propyl; mit R², R³ und/oder R⁵ in den vorgenannten Formeln unabhängig einem linearen oder verzweigten Alkylrest mit 1 bis 4 C-Atomen entsprechen, vorzugsweise unabhängig voneinander Methyl oder Ethyl, und
- in Formel (I) HX eine Säure darstellt, wobei X ein anorganischer oder organischer Säurerest ist, mit x, y und u unabhängig voneinander gleich 0 oder 1 und a, b, c, d und e unabhängig voneinander ganzzahlig sind mit a≥0, b≥0, c≥0, d≥0, e≥0 und (a+b+c+d)≥2, vorzugsweise (a+b+c+d)≥4, besonders vorzugsweise (a+b+c+d)≥10 liegt, mit X beispielsweise Chlorid, Nitrat, Formiat oder Acetat umfasst,
oder (ii) worin die Organosiloxane Co-Kondensate oder Block-Co-Kondensate oder Gemische dieser abgeleitet aus mindestens zwei der zuvor genannten Alkoxysilane der allgemeinen Formeln II, III, IV und V sind, vorzugsweise im molaren Verhältnis aus den Formeln II und III 1:≤ 3,5 abgeleitet oder auch mit a, b, c und d im Mol der

Alkoxysilane der Formeln II, III, IV und V mit einem molaren Verhältnis von 0,1 ≤ [a/b+c+d], insbesondere 0,25 ≤ [a/b+c+d] ≤ 6000, vorzugsweise 1 ≤ [a/b+c+d] ≤ 3 mit a > 0, b > 0, c ≥ 0 und d ≥ 0,
oder (iii) monomere fluororganylsubstituierten Silicium-Verbindungen der allgemeinen Formel VI

R⁴-Y-(CH₂)ₖSi(R³)_{y}(OR¹)_{3-y} (VI),

wobei R⁴, Y, R¹, R³, k und y die oben angegebene Bedeutung haben, und/oder Mischungen mehrerer monomerer Verbindungen der allgemeinen Formel VI, sein.

Die erfindungsgemäß eingesetzten fluororganylsubstituierten Silicium-Verbindungen können in flüssiger oder gelöster oder in Wasser dispergierter oder emulgierter oder pastöser bzw. cremeartiger Form vorliegen. Es hat sich gezeigt, dass die Substanzen dann besonders gut und homogen in der erfindungsgemäßen Mischung eingearbeitet werden können.

Vorteilhaft können die besagten fluororganylsubstituierten Silicium-Verbindungen aber auch in Form einer wässrigen Zubereitung, z. B. als wässrige Lösung bzw. Dispersion oder Emulsion, verwendet werden. Dadurch kann die Einarbeitbarkeit in die wässrigen, zementhaltigen Mischungen zusätzlich vereinfacht werden. Solche wässrigen Zubereitungen können insbesondere wässrige Dispersionen oder Emulsionen eines fluororganylsubstituierten Silans und/oder Siloxans sein, die einen Gehalt an fluororganylsubstituierter Silicium-Verbindung von insgesamt 2,5 Gew.-% bis 90 Gew.-%, bevorzugt 5 Gew.-% bis 80 Gew.-%, besonders bevorzugt 5 Gew.-% bis 70 Gew.-%, ganz besonders bevorzugt 10 Gew.-% bis 60 Gew.-% (jeweils bezogen auf die Gesamtmasse der wässrigen Emulsion) enthalten.

Sofern erfindungsgemäß eingesetzte fluororganylsubstituierte Silicium-Verbindungen in Form einer wässrigen Emulsion vorliegen, kann diese mindestens einen Emulgator enthalten, der vorteilhaft aus der Reihe der Alkylsulfate mit C₈-C₁₈-Alkyl, Alkyl- und Alkarylethersulfate mit C₈-C₁₈-Alkyl im hydrophoben Rest und mit 1 bis 40 Ethylenoxid (EO)- bzw. Propylenoxid (PO)-Einheiten, Alkylsulfonate mit C₈-C₁₈-Alkyl, Alkarylsulfonate mit C₈-C₁₈-Alkyl, ist und Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und C₈-C₂₀-Kohlenstoffatomen in den Alkyl- oder Arylresten, Ethylenoxid/Propylenoxid (EO/PO)-Blockcopolymer mit 8 bis 40 EO- bzw. PO-Einheiten, Additionsprodukte von Alkylaminen mit C₈-C₂₂-Alkylresten mit Ethylenoxid oder Propylenoxid, Alkylpolyglykoside mit linearen oder verzweigten gesättigten oder ungesättigten C₈-C₂₄-Alkylresten und Oligoglykosidresten mit 1 bis 10 Hexose- oder Pentoseeinheiten, siliciumfunktionelle Tenside oder Mischungen dieser Emulgatoren ausgewählt ist. Der Gehalt an Emulgator in einer solchen Emulsion beträgt vorzugsweise 0,01 bis 5 Gew.-%, bezogen auf Gesamtgewicht der Emulsion.

Darüber hinaus kann eine wässrige Zusammensetzung einer erfindungsgemäß eingesetzten fluororganylsubstituierten Silicium-Verbindung vorteilhaft noch übliche Hilfsstoffe, ausgewählt aus anorganischen oder organischen Säuren, Puffersubstanzen, Fungiziden, Bakteriziden, Algiziden, Mikrobioziden, Geruchsstoffen, Korrosionsinhibitoren, Konservierungsmittel, Rheologiehilfsmittel enthalten.

Sofern eingesetzt können silikatische Zusatzstoffe vorteilhaft ausgewählt werden aus der Reihe der Mikrosilica, Flugasche, Flammkieselsäuren, Fällungskieselsäuren, Zeolithe, kristallinen Kieselsäuren, Kieselsole, Kaolin, Mica, Kieselgur, Diatomeenerde, Talkum, Wollastonit oder Clay oder aus einem Gemisch aus entsprechenden Mikrosilica, Flugasche, Flammkieselsäuren, Fällungskieselsäuren, Zeolithe, kristallinen Kieselsäuren, Kieselsole, Kaolin, Mica, Kieselgur, Diatomeenerde, Talkum, Wollastonit oder Clay, oder aus einer wässrigen Dispersion mindestens einer pyrogen hergestellten Kieselsäure oder mindestens einer gefällten Kieselsäure oder eines Gemisch aus pyrogen hergestellten sowie gefällten Kieselsäuren.

Typischerweise ist natürlich noch Wasser in der erfindungsgemäßen hydraulisch abbindenden Mischung enthalten oder wird dieser zugegeben. Die Menge an Wasser beträgt dabei vorzugsweise 1 bis 20 Gew.-%.

Wird die erfindungsgemäß eingesetzte fluororganylsubstituierte Silicium-Verbindung in Form ihrer wässrigen Zubereitung eingesetzt, so wird vorteilhaft für die Berechnung der gesamten Zusammensetzung der zementgebundenen Mischung nur der Anteil an Aktivstoff in der jeweiligen wässrigen Zusammensetzung als erfindungsgemäße fluororganylsubstituierte Silicium-Verbindung berücksichtigt. Vorteilhaft wird der Wassergehalt dieser wässrigen Zubereitungen bei der Berechnung der nötigen Zugabemenge an Wasser berücksichtigt.

Verflüssiger können alle gängigen Flieshilfsmittel, insbesondere Polycarboxylatether (PCEs) und/oder Polymethylmethacrylate sowie Ligninsulfonate oder Naphthalin-Formaldehyd-Sulfonate, sein.

Erfindungsgemäße hydraulisch abbindende Mischungen können als weitere Hilfsstoffe beispielsweise Dispergierhilfsmittel und Netzhilfsmittel, wie beispielsweise Siliconate oder Alkylphosphonate, Entschäumer, wie beispielsweise Trialkylphosphate, Luftporenbildner, wie verseifte Harzsäuren, Verzögerer sowie Beschleuniger, wie beispielsweise Formiate, und/oder Wasserreduzierer, enthalten.

Vorteilhaft können erfindungsgemäße hydraulisch abbindende Mischungen in der Betonindustrie eingesetzt werden, wobei man diese in üblichen Zwangsmischern mischt.

Dabei kann man vorteilhaft so vorgehen, dass man den Zement und die festen Zuschlägen vormischt, gegebenenfalls flüssige, nicht-wässrige Komponenten ebenfalls mit dem Zement vormischt, wässrige Formulierungen, wie eine erfindungsgemäße Lösung oder wässrige Dispersion oder Emulsion einer fluororganylsubstituierten Silicium-Verbindung hingegen zusammen mit dem Anmachwasser zugibt. Solche Formulierungen können vorteilhaft im Anmachwasser vordispergiert werden. Der Gehalt an zusätzlich eingebrachtem Wasser kann vorteilhaft bei der Einstellung des gewünschten w/z-Wertes berücksichtigt werden. Die Verarbeitbarkeit der erfindungsgemäßen Mischungen ist im Vergleich zu unmodifizierten Mischungen vorteilhaft unverändert.

Man kann aber auch ein Feststoffgemisch einer erfindungsgemäßen hydraulisch abbindenden Mischung in einem Zwangsmischer vorlegen und in einem Zuge oder Portionsweise eine definierten Menge an Wasser zusetzen und mischen.

Eine so erhaltene erfindungsgemäße hydraulisch abbindende Mischung kann nachfolgend einer dem Fachmann an sich bekannten Formgebung und Aushärtung unterzogen werden, deren Oberflächen in Sinne der Erfindung vorteilhaft auch bei Abrieb eine nur geringere Verschmutzungsneigung ("easy-to-clean"-Eigenschaft) aufweist.

Gegenstand der vorliegenden Erfindung sind somit auch Werkstoffe, insbesondere Bauteile, Betonwaren oder Formkörper, die unter Einsatz einer erfindungsgemäßen hydraulisch abbindenden Mischung erhältlich sind.

Weiter ist Gegenstand der vorliegenden Erfindung die Verwendung einer erfindungsgemäßen hydraulisch abbindenden Mischung zur Herstellung von Werkstoffen, insbesondere Bauteilen, Betonwaren oder Formkörper, wobei deren Oberfläche auch bei Abrieb eine nur geringere Verschmutzungsneigung ("easy-to-clean"-Eigenschaft) aufweist.

Ebenfalls Gegenstand der vorliegenden Erfindung ist die Verwendung einer fluororganylsubstituierten Silicium-Verbindung zur Massenmodifizierung einer hydraulisch abbindenden Mischung zur Herstellung von Werkstoffen mit "easy-to-clean"-Eigenschaften, wobei die Silicium-Verbindungen ausgewählt ist aus der Reihe der monomeren fluoralkylsubstituierten Silane und fluoralkylsubstituierten Siloxane oder Mischungen davon, - die 6 bis 25 Gew.-% Zement, - 50 bis 90 Gew.-% mindestens eines Zuschlagstoff, wobei das Größtkorn 8 bis 63 mm und/oder bei Sand 5 mm ist, sowie optional, 1 bis 20 Gew.-% Wasser und/oder - 0,01 bis 2 Gew.-% Fließmittel, ausgewählt aus der Reihe Polycarboxylatether (PCEs), Polymethylmethacrylate, Ligninsulfonate und Naphthalin-Formaldehyd-Sulfonate, und/ oder - 0,01 bis 1 Gew.-% mindestens eines weiteren Hilfsmittels ausgewählt aus der Reihe Dispergierhilfsmittel, Netzmittel, Entschäumer, Luftporenbildner, Verzögerer, Beschleuniger und Wasserreduzierer enthält.

So kann man eine erfindungsgemäße hydraulisch abbindende Mischung vorteilhaft im Baubereich verwenden, insbesondere zur Herstellung von Werkstücken, für Betonpflastersteine, oder auch als Vorsatzbeton, insbesondere in Vorsetzen für Pflastersteine.

Es ist festzuhalten, dass für die Hersteller von zementgebundenen Werkstücken, insbesondere für die Hersteller von Betonsteinen, es bis heute von großem Interesse war, hydraulisch abbindende, insbesondere zementgebundene Werkstücke nachhaltig zu modifizieren und trotz Abrieb- und Witterungseinflüssen "easy-to-clean"-Eigenschaften an der Oberfläche zu gewährleisten.

Durch die Bereitstellung und den Einsatz erfindungsgemäßer Mischungen können aufgrund der neu erzielten, trotz Abrieb und Witterung dauerhaften "easy-to-clean"-Eigenschaften von hydraulisch erhärteten Werkstücken Reinigungs- und Wartungskosten durch verlängerte Reinigungszyklen deutlich reduziert werden. Solche Massenmodifizierungen können vorteilhaft insbesondere im laufenden Betrieb eines Herstellwerkes vorgenommen werden und die Werkstücke können bereits fertig geschützt ausgeliefert werden. Zusätzlicher Aufwand an der Baustelle entfällt.

Aber auch vor Ort einer Applikation können erfindungsgemäße Massen hergestellt und vorteilhaft eingesetzt werden.

Die Erfindung wird anhand der nachfolgenden Beispiele näher erläutert, ohne jedoch den Gegenstand der Erfindung zu beschränken.

### Beispiele

Die verwendeten Mörtelprüfkörper wurden aus einem handelsüblichen Universalmörtel (Mörtelgruppe II gemäß DIN V 18580, Mörtelgruppe P II gemäß DIN V 18550) der Firma Quick-Mix angefertigt. Dazu wurden je ca. 100 g des Mörtels mit ca. 24 ml Wasser innig verrührt. Das in den Beispielen jeweils aufgeführte Zusatzmittel wurde jeweils im Anmachwasser vordispergiert. Die entstandene Mischung wurde in PE-Schalungen gefüllt, 24 h bei 25 °C getrocknet, anschließend entschalt und für weitere 28 Tage bei 25 °C ausgehärtet. Die Verschmutzungseigenschaften wurden in Anlehnung an DIN EN ISO 10545-14 bestimmt, der Test wird unten genauer beschrieben.

Angaben in Gew.-% beziehen sich jeweils auf das Gewicht der vollständigen Trockenmischung.

Die Herstellung der fluoralkylsilanbasierten Zusatzmittel kann, wie in Beispiel 1 der DE 199 55 047 beschrieben, erfolgen:
Herstellung eines wasserlöslichen Kondensats bzw. Cokondensats aus DYNASYLAN® TRIAMO (N-[N'-(2-Aminoethyl)-2-aminoethyl]-3-aminopropyltrimethoxysilan) und DYNASYLAN® F 8261 (Tridecafluor-1,1,2,2-tetrahydrooctyltriethoxysilan) im molaren Verhältnis 1 : 3

### Apparatur:

Beheizbarer Rührreaktor mit Destilliervorrichtung, Innenthermometer, Dosiervorrichtung

### Bilanz:

**Einsatzstoffe**

| | | |
|---|---|---|
| m(DYNASYLAN® TRIAMO) | = 26,5 g | 0,1 mol |
| m(DYNASYLAN® F 8261) | = 153,0 g | 0,3 mol |
| m(Ethanol) | = 60,0 g | |
| m(Wasser) | = 10,9 g | 1,5 mol/mol Si (Vorhydrolyse) |
| m(Ameisensäure) | = 16,3 g | 0,3 mol (Biesterfeld, 85 %) |
| m(Wasser) | = 860,0 g | |
| Auswaage | | |
| m(Destillat) | = 113,0 g | |
| m(Produkt) | = 1 020,0 g | |

### Durchführung:

26,5 g TRIAMO, 153,0 g F 8261 und 60 g Ethanol werden vorgelegt und 2 Stunden lang bei Rückfluss (ca. 80 °C) gerührt. Anschließend wird bei ca. 50 °C das Wasser für die Vorhydrolyse zudosiert. Das Reaktionsgemisch wird 8 Stunden bei Rückfluss (ca. 78 °C) hydrolysiert. Danach werden 16,3 g Ameisensäure (85 %) bei ca. 50 °C zudosiert und 860 g Wasser zugegeben. Danach ist das Produkt leicht trüb.

Der entstandene Hydrolysealkohol und die 60 g Ethanol werden unter Vakuum abdestilliert.

| | |
|---|---|
| Druck: | 160 - 130 mbar |
| Innentemperatur: | 48 - 50 °C |

Die Untersuchung des Produkts mittels 29-Si-NMR-Analyse ergab:

| | |
|---|---|
| 12,9 mol-% Si - | monomeres Silan (triaminofunktionell) und M-Strukturen (triaminofunktionell) |
| 9,2 mol-% Si - | M-Strukturen (fluoralkylfunktionell) und D-Strukturen (triaminofunktionell), |
| 68,1 mol-% Si - | D-Strukturen (fluoralkylfunktionell) und T-Strukturen (triaminofunktionell). |

Ferner wurde eine mittlere Partikelgröße D₅₀ von 0,0374 µm (Laser-Lichtstreuung) ermittelt.

### Beispiel 1 (Vergleichsbeispiel)

Ein Mörtelprüfkörper wurde, wie oben beschrieben, hergestellt. Dabei wurden keine Zusatzmittel eingesetzt.

### Beispiel 2

Ein Mörtelprüfkörper wurde, wie oben beschrieben, hergestellt. Im Anmachwasser wurden vor Zugabe 3 Gew.-% der wässrigen Fluoralkylsilanformulierung, hergestellt wie oben gemäß Beispiel 1 der DE 19955047 beschrieben, dispergiert.

### Beispiel 3

Ein Mörtelprüfkörper wurde, wie oben beschrieben, hergestellt. Im Anmachwasser wurden vor Zugabe 3 Gew.-% 3,3,4,4,5,5,6,6,7,7,8,8,8-Tridecafluoroctyl-triethoxysilan dispergiert.

### Beispiel 4 (Vergleichsbeispiel)

Ein Mörtelprüfkörper wurde, wie oben beschrieben, hergestellt. Im Anmachwasser wurden vor Zugabe 2 Gew.-% einer o/w Emulsion, die 50 Gew.-% eines Octyltriethoxysilans enthält, dispergiert.

### Auswertung

### "easy-to-clean"-Eigenschaften:

Auf die Oberfläche der ausgehärteten Mörtelprüfkörper (nicht auf die Schalseite) wurde je ein Tropfen (ca. 0,5 ml) der Verschmutzungsagentien Kaffee (schwarz, gezuckert, kalt), Cola, Rotwein, sowie Olivenöl aufgetragen. Nach 1 h Einwirkzeit bei 25 °C wurde die Oberfläche mit einem weichen Tuch abgetupft und mit vollentsalztem Wasser für 3 min beaufschlagt. Schließlich wird das Wasser mit einem weichen Tuch abgetupft und die Verschmutzung der Oberfläche nach Trocknung visuell beurteilt. Dabei bedeutet 5, dass keine Verschmutzungen sichtbar sind, 4 bedeutet, dass Verschmutzungen schwach sichtbar sind, 3 bedeutet, dass Verschmutzungen sichtbar sind, 2 bedeutet, dass Verschmutzungen deutlich sichtbar sind und 1 bedeutet, dass Verschmutzungen stark sichtbar sind. Von guten "easy-to-clean"-Eigenschaften kann nur gesprochen werden, wenn eine deutliche Verbesserung gegen eine unbehandelte Vergleichsprobe erreicht wird. Von sehr guten "easy-to-clean"-Eigenschaften kann gesprochen werden, wenn die 3 wässrigen Verschmutzungsagentien (Kaffee, Cola, Rotwein) jeweils eine 4 oder 5 erreichen und gleichzeitig Olivenöl eine deutlich Verbesserung gegen eine unbehandelte Vergleichsprobe erreicht. In Tabelle 1 sind die Ergebnisse der Verschmutzungsprüfung dargestellt.

**Tabelle 1: Ergebnisse der Verschmutzungsprüfung**

| Beispiel | Verschmutzung mit Kaffee (gezuckert) | Verschmutzung mit Cola | Verschmutzung mit Rotwein | Verschmutzung mit Olivenöl |
|---|---|---|---|---|
| 1 | 1 | 5 | 1 | 1 |
| 2 | 3 | 4 | 3 | 3 |
| 3 | 4 | 5 | 4 | 4 |
| 4 | 2 | 4 | 1 | 1 |

Es wird deutlich, dass man gemäß oben stehender Definition mit der erfindungsgemäßen Mischung aus Beispiel 3 sehr gute "easy-to-clean"-Eigenschaften erreicht und mit der erfindungsgemäßen Mischung aus Beispiel 2 noch gute "easy-to-clean"-Eigenschaften erreicht. Die Vergleichsmischung 4, die ausschließlich fluorfreies Alkylsilan enthält, zeigt dagegen keine Verbesserung der Reinigungseigenschaften.

## Patentansprüche

1. Eine hydraulisch abbindende Mischung umfassend:
a) 6 bis 25 Gew.-% Zement,
b) 50 bis 90 Gew.-% mindestens eines Zuschlagstoffs, wobei das Größtkorn 8 bis 63 mm und/oder bei Sand 5 mm ist, und
c) 0,01 bis 8 Gew.-% mindestens einer fluororganylsubstituierten Silicium-Verbindung ausgewählt aus der Reihe der monomeren fluoralkylsubstituierten Silane und fluoralkylsubstituierten Siloxane oder Mischungen davon,
d) 0,01 bis 2 Gew.-% Fließhilfsmittel ausgewählt aus der Reihe Polycarboxylatether (PCEs), Polymethylmethacrylate, Ligninsulfonate und Naphthalin-Formaldehyd-Sulfonate, und/oder
e) 0,01 bis 1 Gew.-% mindestens eines weiteren Hilfsmittels ausgewählt aus der Reihe Dispergierhilfsmittel, Netzhilfsmittel, Entschäumer, Luftporenbildner, Verzögerer, Beschleuniger und Wasserreduzierer.

2. Mischung nach Anspruch 1,
**dadurch gekennzeichnet,**
**dass** der Zement aus der Reihe der Portland-Zemente, Kompositzemente, Zemente mit Anteilen an Puzzolanen und Hochofenzemente ausgewählt ist.

3. Mischung nach Anspruch 1 oder 2,
**dadurch gekennzeichnet,**
**dass** der Zuschlagstoff aus der Reihe der Aggregate, Sande, Kiese, Splitte, Porphyr, Quarzmehl, Kalkmehl, Gesteinsmehl, Flugaschen, Mikrosilica und sonstige silikatische Zusatzstoffe oder Mischungen davon ausgewählt ist, wobei besonders bevorzugt ein Aggregat mit 32 mm Größtkorn und/oder Sand mit 5 mm Größtkorn ausgewählt ist.

4. Mischung nach einem der Ansprüche 1 bis 3,
**dadurch gekennzeichnet,**
**dass** die fluororganylsubstituierte Silicium-Verbindung ausgewählt ist aus der Reihe
(i) von Verbindungen, die aus den allgemeinen Formeln I, II, III, IV und/oder V abgeleitet sind und vernetzende Strukturelemente aufweisen können, die kettenförmige, cyclische, vernetzte und/oder raumvernetzte Strukturen bilden, wobei mindestens eine Struktur in idealisierter Form der allgemeinen Formel I entspricht,
(HO)[(HO)₁₋ₓ(R²)ₓSi(A)O]ₐ[Si(B)(R³)_{y}(OH)_{1-y}O]_{b}[Si(C)(R⁵)ᵤ(OH)₁₋ᵤO]_{c}[Si(O)(OH)O]_{d}H ·(HX)ₑ (I)
wobei in Formel I die Strukturelemente aus Alkoxysilan der allgemeinen Formeln II, III, IV und/oder V abgeleitet sind und
- A einem Aminoalkylrest H₂N(CH₂)_{f}(NH)_{g}(CH₂)ₕ(NH)ₘ(R⁷)ₙ- in dem Strukturelement, abgeleitet aus der allgemeinen Formel II entspricht,
H₂N(CH₂)_{f}(NH)_{g}(CH₂)ₕ(NH)ₘ(R⁷)ₙSi(OR¹)₃₋ₓ(R²)ₓ (II),
wobei f eine ganze Zahl zwischen 0 und 6 ist, MIT g=0 falls f=0 und g=1 falls f>0, h eine ganze Zahl zwischen 0 und 6, x=0 oder 1, m=0 oder 1 und n=0 oder 1, MIT n+m=0 oder 2 in Formel II ist, und R⁷ eine lineare, verzweigte oder cyclische bivalente Alkyl-Gruppe mit 1 bis 16 C-Atomen ist,
- B einem Fluoralkylrest R⁴-Y-(CH₂)ₖ- in dem Strukturelement, abgeleitet aus der allgemeinen Formel III entspricht,
R⁴-Y-(CH₂)ₖSi(R³)_{y}(OR¹)_{3-y} (III),
wobei R⁴ eine mono-, oligo- oder perfluorierte Alkyl-Gruppe mit 1 bis 9 C-Atomen oder eine mono-, oligo- oder perfluorierte Aryl-Gruppe, Y eine CH₂-, O- oder S-Gruppe, R³ eine lineare, verzweigte oder cyclische Alkyl-Gruppe mit 1 bis 8 C-Atomen oder eine Aryl-Gruppe bedeuten, k=0, 1 oder 2 und y=0 oder 1 in Formel III und/oder VI ist, vorzugsweise ist R⁴ = F₃C(CF₂)ᵣ-, mit r=0 bis 18, vorzugsweise r=5, mit Y eine CH₂- oder O-Gruppe, und vorzugsweise k=1 mit Y = -CH₂-,
- C einem Alkylrest R⁵- in dem Strukturelement, abgeleitet aus der allgemeinen Formel IV entspricht,
R⁶-Si(R⁵)ᵤ(OR¹)₃₋ᵤ (IV),
wobei R⁵ eine lineare oder verzweigte Alkyl-Gruppe mit 1 bis 4 C-Atomen, insbesondere Methyl und u=0 oder 1 in Formel IV ist,
- D einem Alkylrest R⁶- in dem Strukturelement, abgeleitet aus der allgemeinen Formel IV entspricht,
R⁶-Si(OR¹)₃ (V),
worin R⁶ in den vorgenannten Formeln eine lineare, verzweigte oder cyclische Alkyl-Gruppe mit 1 bis 8 C-Atomen bedeutet, und
R¹ in den Formeln II, III, IV, V und/oder VI unabhängig von einander eine lineare, verzweigte oder cyclische Alkyl-Gruppe mit 1 bis 8 C-Atomen oder ein Aryl-Gruppe bedeutet, vorzugsweise ist R¹ unabhängig Methyl, Ethyl oder Propyl; mit R², R³ und/oder R⁵ in den vorgenannten Formeln unabhängig einem linearen oder verzweigten Alkylrest mit 1 bis 4 C-Atomen entsprechen, vorzugsweise unabhängig voneinander Methyl oder Ethyl, und
- in Formel (I) HX eine Säure darstellt, wobei X ein anorganischer oder organischer Säurerest ist, mit x, y und u unabhängig voneinander gleich 0 oder 1 und a, b, c, d und e unabhängig voneinander ganzzahlig sind mit a≥0, b≥0, c≥0, d≥0, e≥0 und (a+b+c+d) ≥2, vorzugsweise (a+b+c+d) ≥4, besonders vorzugsweise (a+b+c+d) ≥10 liegt, mit X beispielsweise Chlorid, Nitrat, Formiat oder Acetat umfasst,
oder
(ii) worin die Organosiloxane Co-Kondensate oder Block-Co-Kondensate oder Gemische dieser abgeleitet aus mindestens zwei der zuvor genannten Alkoxysilane der allgemeinen Formeln II, III, IV und V sind, vorzugsweise im molaren Verhältnis aus den Formeln II und III 1:≤ 3,5 abgeleitet oder auch mit a, b, c und d im Mol der Alkoxysilane der Formeln II, III, IV und V mit einem molaren Verhältnis von 0,1 ≤ [a/b+c+d], insbesondere 0,25 ≤ [a/b+c+d] ≤ 6000, vorzugsweise 1 ≤ [a/b+c+d] ≤ 3 mit a > 0, b > 0, c ≥ 0 und d ≥ 0,
oder
(iii) von monomeren fluororganylsubstituierten Silicium-Verbindungen der allgemeinen Formel VI
R⁴-Y-(CH₂)ₖSi(R³)_{y}(OR¹)_{3-y} (VI),
wobei R⁴, Y, R¹, R³, k und y die oben angegebene Bedeutung haben, vorzugsweise Tridecafluor-1,1,2,2-tetrahydrooctyltrimethoxysilan sowie Tridecafluor-1,1,2,2-tetrahydrooctyltriethoxysilan,
und/oder
Mischungen mehrerer monomerer Verbindungen der allgemeinen Formel VI.

5. Mischung nach einem der Ansprüche 1 bis 4,
**dadurch gekennzeichnet,**
**dass** die fluororganylsubstituierte Silicium-Verbindung als flüssige monomere Verbindung oder in Lösung oder als wässrige Dispersion oder Emulsion oder als pastöser bzw. cremeförmige Zubereitung vorliegt, bevorzugt als wässrige Dispersion oder Emulsion eines fluororganylsubstituierten Silans und/oder Siloxans mit einem Wirkstoffgehalt an fluororganylsubstituiertem Silan und/oder Siloxan von 2,5 bis 90 Gew.-%.

6. Mischung nach einem der Ansprüche 1 bis 5,
**dadurch gekennzeichnet,**
**dass** die Mischung 1 bis 20 Gew.-% Wasser umfasst.

7. Verfahren zur Herstellung einer Mischung nach Anspruch 6,
**dadurch gekennzeichnet,**
**dass** man ein Gemisch nach einem der Ansprüche 1 bis 5 mit Wasser versetzt und in einem Mischapparat mischt.

8. Verwendung einer Mischung nach einem der Ansprüche 1 bis 6 oder einer nach Anspruch 7 hergestellten Mischung zur Herstellung von Werkstoffen, insbesondere Bauteilen, Betonwaren oder Formkörper.

9. Verwendung einer Mischung nach einem der Ansprüche 1 bis 6 oder einer nach Anspruch 7 hergestellten Mischung zur Herstellung von Vorsatzbeton.

10. Verwendung einer fluororganylsubstituierten Silicium-Verbindung zur Massenmodifizierung einer hydraulisch abbindenden Mischung zur Herstellung von Werkstoffen mit "easy-to-clean"-Eigenschaften,
wobei die fluororganylsubstituierten Silicium-Verbindung ausgewählt ist aus der Reihe der monomeren fluoralkylsubstituierten Silane und fluoralkylsubstituierten Siloxane oder Mischungen davon, - die 6 bis 25 Gew.-% Zement,
- 50 bis 90 Gew.-% mindestens eines Zuschlagstoff, wobei das Größtkorn 8 bis 63 mm und/oder bei Sand 5 mm ist, sowie, optional, 1 bis 20 Gew.-% Wasser, und/oder
- 0,01 bis 2 Gew.-% Fließhilfsmittel ausgewählt aus der Reihe Polycarboxylatether (PCEs), Polymethylmethacrylate, Ligninsulfonate und Naphthalin-Formaldehyd-Sulfonate, und/oder
- 0,01 bis 1 Gew.-% mindestens eines weiteren Hilfsmittels, ausgewählt aus der Reihe Dispergierhilfsmittel, Netzhilfsmittel, Entschäumer, Luftporenbildner, Verzögerer, Beschleuniger und Wasserreduzierer enthält.

11. Werkstoffe, insbesondere Bauteile, Betonwaren oder Formkörper, hergestellt unter Verwendung einer Mischung nach einem der Ansprüche 1 bis 6 oder einer nach Anspruch 7 hergestellten Mischung.

## Claims

1. Hydraulically setting mixture comprising:
a) from 6 to 25% by weight of cement,
b) from 50 to 90% by weight of at least one aggregate, wherein the maximum particle size is from 8 to 63 mm and/or in the case of sand is 5 mm, and
c) from 0.01 to 8% by weight of at least one fluoroorganyl-substituted silicon compound selected from the group consisting of the monomeric fluoroalkyl-substituted silanes and fluoroalkyl-substituted siloxanes or mixtures thereof,
d) from 0.01 to 2% by weight of plasticizers selected from the group consisting of polycarboxylate ethers (PCEs), polymethyl methacrylates, lignosulfonates and naphthalene formaldehyde sulfonates, and/or
e) from 0.01 to 1% by weight of at least one further auxiliary selected from the group consisting of dispersants, wetting agents, antifoams, air pore formers, retarders, accelerators and water reducers.

2. Mixture according to Claim 1,
**characterized in that**
the cement is selected from the group consisting of portland cements, composite cements, cements having proportions of pozzolans and blast furnace cements.

3. Mixture according to Claim 1 or 2, **characterized in that**
the aggregate is selected from the group consisting of agglomerates, sands, gravels, crushed material, porphyry, quartz flour, ground limestone, ground rock, fly ashes, microsilica and other siliceous additives mixtures thereof, with particular preference being given to selecting an agglomerate having a maximum particle size of 32 mm and/or sand having a maximum particle size of 5 mm.

4. Mixture according to any of Claims 1 to 3, **characterized in that**
the fluoroorganyl-substituted silicon compound is selected from the group consisting of
(i) compounds which are derived from the general formulae I, II, III, IV and/or V and can have crosslinking structural elements which form chain-like, cyclic, crosslinked and/or three-dimensionally crosslinked structures, where at least one structure in idealized form corresponds to the general formula I,
(HO)[(HO)₁₋ₓ(R²)ₓSi(A)O]ₐ[Si(B)(R³)_{y}(OH)_{1-y}O]_{b}[Si(C)(R⁵)ᵤ(OH)₁₋ᵤO]_{c}[Si(D)(OH)O]_{d}H·(HX)ₑ (I)
where, in formula I, the structural elements are derived from alkoxysilane of the general formulae II, III, IV and/or V and
- A corresponds to an aminoalkyl radical H₂N(CH₂)_{f}(NH)_{g}(CH₂)ₕ(NH)ₘ(R⁷)ₙ- in the structural element derived from the general formula II,
H₂N(CH₂)_{f}(NH)_{g}(CH₂)ₕ(NH)ₘ(R⁷)ₙSi(OR¹)₃₋ₓ(R²)ₓ (II),
where f is an integer in the range from 0 to 6, where g = 0 when f = 0 and g = 1 when f > 0, h is an integer in the range from 0 to 6, x = 0 or 1, m = 0 or 1 and n = 0 or 1, where n + m = 0 or 2 in formula II, and R⁷ is a linear, branched or cyclic divalent alkyl group having from 1 to 16 carbon atoms,
- B corresponds to a fluoroalkyl radical R⁴-Y-(CH₂)ₖ- in the structural element derived from the general formula III,
R⁴-Y-(CH₂)ₖSi(R³)_{y}(OR¹)_{3-y} (III),
where R⁴ is a monofluorinated, oligofluorinated or perfluorinated alkyl group having from 1 to 9 carbon atoms or a monofluorinated, oligofluorinated or perfluorinated aryl group, Y is a CH₂, O or S group, R³ is a linear, branched or cyclic alkyl group having from 1 to 8 carbon atoms or an aryl group, k = 0, 1 or 2 and y = 0 or 1 in formula III and/or VI, R⁴ is preferably F₃C(CF₂)ᵣ-, where r = 0 to 18, preferably r = 5, where Y is a CH₂ or O group, and k is preferably 1 with Y = -CH₂-,
- C corresponds to an alkyl radical R⁵- in the structural element derived from the general formula IV,
R⁶-Si(R⁵)ᵤ(OR¹)₃₋ᵤ (IV),
where R⁵ is a linear or branched alkyl group having from 1 to 4 carbon atoms, in particular methyl and u = 0 or 1 in formula IV,
- D is an alkyl radical R⁶- in the structural element derived from the general formula IV,
R⁶-Si(OR¹)₃ (V),
where R⁶ in the abovementioned formulae is a linear, branched or cyclic alkyl group having from 1 to 8 carbon atoms, and
the radicals R¹ in the formulae II, III, IV, V and/or VI are each, independently of one another, a linear, branched or cyclic alkyl group having from 1 to 8 carbon atoms or an aryl group, and R¹ is preferably, independently, methyl, ethyl or propyl; where R², R³ and/or R⁵ in the abovementioned formulae each correspond, independently of one another, to a linear or branched alkyl radical having from 1 to 4 carbon atoms, preferably independently of one another methyl or ethyl, and
- in formula (I), HX is an acid, where X is an inorganic or organic acid radical, where x, y and u are each, independently of one another, 0 or 1 and a, b, c, d and e are each, independently of one another, integers where a ≥ 0, b ≥ 0, c ≥ 0, d ≥ 0, e ≥ 0 and (a+b+c+d) ≥ 2, preferably (a+b+c+d) ≥ 4, particularly preferably (a+b+c+d) ≥ 10, where X is, for example, chloride, nitrate, formate or acetate,
or
(ii) compounds in which the organosiloxanes are cocondensates or block cocondensates or mixtures of these derived from at least two of the abovementioned alkoxysilanes of the general formulae II, III, IV and V, preferably derived in a molar ratio of 1:≤ 3.5 from the formulae II and III or else where a, b, c and d in the mol of the alkoxysilanes of the formulae II, III, IV and V with a molar ratio of 0.1 ≤ [a/b+c+d], in particular 0.25 ≤ [a/b+c+d] ≤ 6000, preferably 1 ≤ [a/b+c+d] ≤ 3 where a > 0, b > 0, c ≥ 0 and d ≥ 0,
or
(iii) monomeric fluoroorganyl-substituted silicon compounds of the general formula VI
R⁴-Y-(CH₂)ₖSi(R³)_{y}(OR¹)_{3-y} (VI),
where R⁴, Y, R¹, R³, k and y are as defined above, preferably tridecafluoro-1,1,2,2-tetrahydrooctyltrimethoxysilane or tridecafluoro-1,1,2,2-tetrahydrooctyltriethoxysilane,
and/or
mixtures of a plurality of monomeric compounds of the general formula VI.

5. Mixture according to any of Claims 1 to 4, **characterized in that**
the fluoroorganyl-substituted silicon compound is present as a liquid monomeric compound or in solution or as an aqueous dispersion or emulsion or as a paste-like or cream-like preparation, preferably as an aqueous dispersion or emulsion of a fluoroorganyl-substituted silane and/or siloxane having an active compound content of fluoroorganyl-substituted silane and/or siloxane of from 2.5 to 90% by weight.

6. Mixture according to any of Claims 1 to 5, **characterized in that**
the mixture comprises from 1 to 20% by weight of water.

7. Process for producing a mixture according to Claim 6,
**characterized in that**
a mixture according to any of claims 1 to 5 is admixed with water and mixed in a mixing apparatus.

8. Use of a mixture according to any of Claims 1 to 6 or a mixture produced according to Claim 7 for producing materials, in particular components, concrete goods or moldings.

9. Use of a mixture according to any of Claims 1 to 6 or a mixture produced according to Claim 7 for producing facing concrete.

10. Use of a fluoroorganyl-substituted silicon compound for the body modification of a hydraulically setting mixture for producing materials having easy-to-clean properties,
wherein the fluoroorganyl-substituted silicon compound is selected from the group consisting of monomeric fluoroalkyl-substituted silanes and fluoroalkyl-substituted siloxanes and mixtures thereof,
which contains,
- from 6 to 25% by weight of cement,
- from 50 to 90% by weight of at least one aggregate, where the maximum particle size is from 8 to 63 mm and/or in the case of sand is 5mm, and optionally from 1 to 20% by weight of water, and/or
- from 0.01 to 2% by weight of plasticizers selected from the group consisting of polycarboxylate ethers (PCEs), polymethyl methacrylates, lignosulfonates and naphthalene formaldehyde sulfonates, and/or
- from 0.01 to 1% by weight of at least one further auxiliary selected from the group consisting of dispersants, wetting agents, antifoams, air pore formers, retarders, accelerators and water reducers.

11. Materials, in particular components, concrete products or moldings, produced using a mixture according to any of Claims 1 to 6 or a mixture produced according to Claim 7.

## Revendications

1. Mélange à prise hydraulique comprenant :
a) 6 à 25 % en poids de ciment,
b) 50 à 90 % en poids d'au moins un additif, la grosseur maximale de grain étant de 8 à 63 mm et/ou de 5 mm pour du sable, et
c) 0,01 à 8 % en poids d'au moins un composé de silicium substitué par fluoroorganyle choisi parmi la série des silanes monomériques substitués par fluoroalkyle et des siloxanes substitués par fluoroalkyle ou des mélanges correspondants,
d) 0,01 à 2 % en poids d'adjuvant d'écoulement choisi parmi la série des éthers de polycarboxylates (PCE), des poly(méthacrylate de méthyle), des lignosulfonates et des naphtalène-formaldéhyde-sulfonates, et/ou
e) 0,01 à 1 % en poids d'au moins un autre adjuvant choisi parmi la série des adjuvants de dispersion, adjuvants de mouillage, agents anti-mousse, entraîneurs d'air, retardateurs, accélérateurs et réducteurs d'eau.

2. Mélange selon la revendication 1, **caractérisé en ce que** le ciment est choisi parmi la série des ciments Portland, des ciments composites, des ciments avec des parts de pouzzolanes et des ciments de hauts-fourneaux.

3. Mélange selon la revendication 1 ou 2, **caractérisé en ce que** l'additif est choisi parmi la série des agrégats, des sables, des graviers, des gravats, du porphyre, de la farine de quartz, de la farine de calcaire, de la farine de pierre, des cendres volantes, de la microsilice et d'autres additifs de type silicate ou des mélanges correspondants, particulièrement préférablement un agrégat comportant une grosseur maximale de grain de 32 mm et/ou du sable comportant une grosseur maximale de grain de 5 mm étant choisi.

4. Mélange selon l'une quelconque des revendications 1 à 3, **caractérisé en ce que** le composé de silicium substitué par fluoroorganyle est choisi parmi la série
(i) des composés, qui dérivent des formules générales I, II, III, IV et/ou V et peuvent présenter des éléments structuraux réticulants, qui forment des structures caténaires, cycliques, réticulées et/ou réticulées dans l'espace, au moins une structure sous forme idéale correspondant à la formule générale I,
(HO)[(HO)₁₋ₓ(R²)ₓSi(A)O]ₐ[Si(B)(R³)_{y}(OH)_{1-y}O]_{b}[Si(C)(R⁵)ᵤ(OH)₁₋ᵤO]_{c}[Si(D)(OH)O]_{d}H ·(HX)ₑ (I)
les éléments structuraux dans la formule I étant dérivés d'un alcoxysilane des formules générales II, III, IV et/ou V et
- A correspondant à un radical aminoalkyle H₂N(CH₂)_{f}(NH)_{g}(CH₂)ₕ(NH)ₘ(R⁷)ₕ- dans l'élément structural, dérivé de la formule générale II,
H₂N(CH₂)_{f}(NH)_{g}(CH₂)ₕ(NH)ₘ(R⁷)ₙSi(OR¹)₃₋ₓ(R²)ₓ (II),
f étant un nombre entier compris entre 0 et 6, avec g = 0 au cas où f = 0 et g = 1 au cas où f > 0, h étant un nombre entier compris entre 0 et 6, x = 0 ou 1, m = 0 ou 1 et n = 0 ou 1, avec n + m = 0 ou 2 dans la formule II, et R⁷ étant un groupe alkyle divalent linéaire, ramifié ou cyclique comportant 1 à 16 atome(s) de C,
- B correspondant à un radical fluoroalkyle R⁴-Y-(CH₂)ₖ- dans l'élément structural, dérivé de la formule générale III,
R⁴-Y-(CH₂)ₖSi(R³)_{y}(OR¹)_{3-y} (III),
R⁴ signifiant un groupe alkyle monofluoré, oligofluoré ou perfluoré comportant 1 à 9 atomes de C ou un groupe aryle monofluoré, oligofluoré ou perfluoré, Y signifiant un groupe CH₂, O ou S, R³ signifiant un groupe alkyle linéaire, ramifié ou cyclique comportant 1 à 8 atome (s) de C ou un groupe aryle, k = 0, 1 ou 2 et y = 0 ou 1 dans la formule III et/ou VI, de préférence R⁴ = F₃C(CF₂)ᵣ-, avec r = 0 à 18, de préférence r = 5, avec Y étant un groupe CH₂ ou O, et de préférence k = 1 avec Y = -CH₂-,
- C correspondant à un radical alkyle R⁵- dans l'élément structural, dérivé de la formule générale IV,
R⁶-Si(R⁵)ᵤ(OR¹)₃₋ᵤ (IV),
R⁵ étant un groupe alkyle linéaire ou ramifié comportant 1 à 4 atome(s) de C, en particulier méthyle et u = 0 ou 1 dans la formule IV,
- D correspondant à un radical alkyle R⁶- dans l'élément structural, dérivé de la formule générale IV,
R⁶-Si(OR¹)₃ (V),
dans les formules précédemment mentionnées R⁶ signifiant un groupe alkyle linéaire, ramifié ou cyclique comportant 1 à 8 atome(s) de C, et
R¹ dans les formules II, III, IV, V et/ou VI indépendamment les uns des autres signifiant un groupe alkyle linéaire, ramifié ou cyclique comportant 1 à 8 atome(s) de C ou un groupe aryle, de préférence R¹ étant indépendamment méthyle, éthyle ou propyle ; R², R³ et/ou R⁵ dans les formules précédemment mentionnées correspondant indépendamment à un radical alkyle linéaire ou ramifié comportant 1 à 4 atome(s) de C, de préférence indépendamment les uns des autres méthyle ou éthyle, et
- dans la formule (I) HX représentant un acide, X étant un radical acide inorganique ou organique, x, y et u indépendamment les uns des autres étant égaux à 0 ou 1 et a, b, c, d et e indépendamment les uns des autres étant des nombres entiers avec a ≥ 0, b ≥ 0, c ≥ 0, d ≥ 0, e ≥ 0 et (a + b + c + d) ≥ 2, de préférence (a + b + c + d) ≥ 4, particulièrement de préférence (a + b + c + d) ≥ 10, X comprenant par exemple chlorure, nitrate, formiate ou acétate,
ou
(ii) les organosiloxanes étant des co-condensats ou des co-condensats bloc ou des mélanges de ceux-ci dérivés d'au moins deux desdits alcoxysilanes des formules générales II, III, IV et V, de préférence dérivés des formules II et III en un rapport molaire de 1 : ≤ 3,5 ou alors avec a, b, c et d en moles des alcoxysilanes des formules générales II, III, IV et V en un rapport molaire de 0,1 ≤ [a/b + c + d], en particulier 0,25 ≤ [a/b + c + d] ≤ 6000, de préférence 1 ≤ [a/b + c + d] ≤ 3 avec a > 0, b > 0, c ≥ 0 et d ≥ 0,
ou
(iii) des composés de silicium substitué par fluoroorganyle monomériques de formule générale VI
R⁴-Y-(CH₂)ₖSi(R³)_{y}(OR¹)_{3-y} (VI),
R⁴, Y, R¹, R³, k et y possédant les significations indiquées ci-dessus, de préférence tridécafluoro-1,1,2,2-tétrahydrooctyltriméthoxysilane ainsi que tridécafluoro-1,1,2,2-tétrahydrooctyltriéthoxysilane,
et/ ou
des mélanges de plusieurs composés monomériques de formule générale VI.

5. Mélange selon l'une quelconque des revendications 1 à 4, **caractérisé en ce que** le composé de silicium substitué par fluoroorganyle se trouve sous forme de composé monomérique liquide ou en solution ou en tant que dispersion aqueuse ou émulsion ou en tant que préparation pâteuse ou, selon le cas, crémeuse, préférablement en tant que dispersion aqueuse ou émulsion d'un silane et/ou siloxane substitué par fluoroorganyle comportant une teneur en agent actif de silane et/ou de siloxane substitué par fluoroorganyle de 2,5 à 90 % en poids.

6. Mélange selon l'une quelconque des revendications 1 à 5, **caractérisé en ce que** le mélange comprend 1 à 20 % en poids d'eau.

7. Procédé pour la préparation d'un mélange selon la revendication 6, **caractérisé en ce que** de l'eau est ajoutée à un mélange selon l'une quelconque des revendications 1 à 5 et on le mélange dans un mélangeur.

8. Utilisation d'un mélange selon l'une quelconque des revendications 1 à 6 ou d'un mélange préparé selon la revendication 7 pour la préparation de matériaux, en particulier de composants, de produits en béton ou d'articles moulés.

9. Utilisation d'un mélange selon l'une quelconque des revendications 1 à 6 ou d'un mélange préparé selon la revendication 7 pour la préparation de béton de parement.

10. Utilisation d'un composé de silicium substitué par fluoroorganyle pour la modification de masse d'un mélange à prise hydraulique pour la préparation de matériaux comportant des propriétés « d'entretien facile », le composé de silicium substitué par fluoroorganyle étant choisi parmi la série des silanes monomériques substitués par fluoroalkyle et des siloxanes substitués par fluoroalkyle ou des mélanges correspondants, - qui contient 6 à 25 % en poids de ciment,
- 50 à 90 % en poids d'au moins un additif, la grosseur maximale de grain étant de 8 à 63 mm et/ou de 5 mm pour du sable, ainsi que, éventuellement, 1 à 20 % en poids d'eau, et/ou
- 0,01 à 2 % en poids d'auxiliaire d'écoulement choisi parmi la série des éthers de polycarboxylates (PCE), des poly(méthacrylate de méthyle), des lignosulfonates et des naphtalène-formaldéhyde-sulfonates, et/ou
- 0,01 à 1 % en poids d'au moins un autre adjuvant choisi parmi la série des adjuvants de dispersion, adjuvants de mouillage, agents anti-mousse, entraîneurs d'air, retardateurs, accélérateurs et réducteurs d'eau.

11. Matériaux, en particulier composants, produits en béton ou articles moulés, préparés en utilisant un mélange selon l'une quelconque des revendications 1 à 6 ou un mélange préparé selon la revendication 7.
